# EUROPEAN PATENT APPLICATION

(11) **EP 4 786 781 A1**
(43) Date of publication of application: **05.08.2026**
(21) Application number: 25155634.6
(22) Date of filing: 03.02.2025
(51) Int. Cl.: F03D 13/10, F03D 13/20, F03D 80/50

(54) **TOWER ADAPTER AND METHOD FOR SECURING A TOWER ADAPTER TO A TOWER**

(71) Applicant: PP Energy ApS, 6430 Nordborg (DK)
(72) Inventor: JUNKER, Peter Moos, 6430 Nordborg (DK); PEDERSEN, Morten, 6500 Vojens (DK); SAMUELSEN, Henrik, 6000 Kolding (DK); HEESEMANN, John, 6000 Kolding (DK); BOURS, Oliver Bernhard Thiim, 8240 Risskov (DK)
(74) Representative: Keil & Schaafhausen Patentanwälte PartGmbB

(57) **Abstract**

The invention relates to a tower adapter (10) securable on an outer surface (101) of a tower (100), for example the tower (100) of an offshore wind turbine, against falling, using tension load transfer means (2) with at least one tension load pathway element (3, 4; 3A, 3B, 4A, 4B) being bowable. The tower adapter (10) includes abutment means (16) for abutment on the outer surface (101) of the tower (100), and a securing device (19) for engagement with the tension load transfer means (2) for securing the tower adapter (10) against normal displacement away from the outer surface (101) of the tower (100). In order to facilitate easy and safe parking of bulky loads at the tower of the offshore wind turbine, the tower adapter (10) is configured such that the abutment means (16) secure the tower adapter (10) against falling by frictional engagement with the outer surface (101) of the tower (100) when the tower adapter (10) is secured against normal displacement away from the outer surface (101) of the tower (100) by the engagement of the securing device (19) with the tension load transfer means (2). The invention further relates to a tower adapter system (1) and a method for securing a tower (10) on an outer surface (101) of a tower (100).

## Description

The invention relates to a tower adapter securable on an outer surface of a tower, for example the tower of an (offshore) wind turbine, against falling. The invention further relates to a tower adapter system including such a tower adapter and to a method for securing a tower adapter on an outer surface of a tower, for example the tower of an (offshore) wind turbine.

Offshore wind turbines need regular inspection and maintenance. Maintenance staff and equipment are transferred by ships to the respective offshore wind turbine.

For the inspection and maintenance of the rotor blades, blade access platforms are known. Such a blade access platform can be vertically suspended from one or more suitable anchor points of the offshore wind turbine, e.g. on a nacelle and/or a hub of the offshore wind turbine. Often, steel cables are used for suspending the blade access platform from the nacelle crane. Typically, the blade access platform can be moved vertically, in more detail lifted upwards and downwards along said cables while being vertically held by said cables. This allows the staff to inspect and maintain different areas along the individual rotor blade. The blade access platform can comprise rollers for rolling along an outer surface of the tower of the offshore wind turbine while the blade access platform moves vertically along the tower.

Often, the tower of the offshore wind turbine has a balcony section. The balcony section is a platform that is typically located at a lower part of the tower, some meters above the sea level. For example, the balcony section can be formed at an upper end of a so-called transition piece. The transition piece connects a monopile at a lower end with an upper tower part above the sea level.

The balcony section can be used by personnel working in and around the offshore word turbine. The balcony area typically includes a small walk area. The walk area can be used to walk around the tower. Often, the balcony section also includes an enlarged portion. The enlarged portion is often referred to as the "lay down area".

The balcony section can be used by staff to access the offshore wind turbine form a service operation vessel. Apart from that, it can be used for the interim storage of maintenance equipment (e.g. tools for inspection and maintenance, and repair materials) that are needed for the inspection and maintenance. The balcony section can have a Davit crane. For example, the Davit crane might be used to lift the maintenance equipment from the service operation vessel onto the balcony section.

It is complex, takes time, and causes expenses to install the blade access platform on the offshore wind turbine and to deinstall it again.

One idea is to pre-install the blade access platform and to lift it as a whole onto the offshore wind turbine, e.g. onto the balcony section. However, the Davit crane has a maximum load and a range limitation. It is typically not possible to lift the complete blade access platform from the service operation vessel onto the balcony section by using the Davit crane which is installed on the balcony section.

Therefore, another idea is to lift the blade access platform in parts onto the balcony section and to assemble the blade access platform on the balcony section. However, as mentioned above, the enlarged portion is typically too small for assembling the blade access platform thereon. Hence, there would be a need to increase the enlarged portion which results in higher costs for building new offshore wind turbines. Further, it will be difficult and cost-expensive to increase the area of the enlarged portion for existing offshore wind turbines. Furthermore, there is a tendency to have larger rotor blades nowadays. This in turn requires larger blade access platforms. Correspondingly, the size of the enlarged portion of the balcony section had to increased further as well.

Apart from that, the complete inspection and maintenance of all blades of the same offshore wind turbine can take several days. The tasks might be interrupted during the night and/or in the case of bad weather, e.g. in the case of strong winds.

It is desired to have an option to park the blade access platform safely directly at the tower during work interruptions. Ideally, the location for parking the blade access platform is at the balcony section or close to the balcony section. Accordingly, the maintenance staff can enter the parked blade access platform from the balcony section easily.

A parking position of the blade access platform near to the balcony section will also facilitate to load the maintenance equipment onto the parked blade access platform.

The offshore wind turbine can be subject to harsh weather conditions like storms. The blade access should be properly secured even when it its "parked" on the tower, e.g. on the balcony section.

The blade access platform could be parked on the balcony section only in the enlarged portion (the lay down area) of the balcony section. However, even the enlarged section is typically too small for parking a blade access platform thereon or for assembling the blade access platform thereon.

There is a further problem, even if in arguendo assuming that the enlarged portion would be large enough: Said enlarged portion is typically located in front of an entrance into the tower of the offshore wind turbine. At said entrance, a door swing area, stairs leading from the balcony section to the entrance, railings at the entrance, and the like are arranged at a side of the tower facing the enlarged portion of the balcony section. In other words, obstacles prevent that the blade access platform can be set down or lifted off from the enlarged portion while remaining with the rollers in engagement with the outer surface of the tower.

On the one hand, the blade access platform must be assembled and/or parked on this enlarged portion of the balcony section. On the other hand, the rollers of the blade access platform cannot be placed directly at the tower while the blade is resting on the balcony section, in more detail on the enlarged portion.

It is difficult to move the blade access platform easily into the enlarged portion (laydown area) of the balcony section because the platform cannot be lowered onto the enlarged portion and lifted away from the enlarged portion with the rollers of the blade access platform directly abutting the outer surface of the tower. Furthermore, an angular position (about a longitudinal central axis of the tower) of a main extension direction of the enlarged portion is in general not the same as an angular position (about the longitudinal central axis of the tower), at which the blade access platform has to be located for inspection and maintenance of the blades. Hence, complex maneuvering of the blade access platform is necessary to move it between the parking position on the enlarged portion of the balcony section on the one hand and a working position directly at the tower surface and coaxial with a lowermost blade.

As already mentioned above, these problems are in addition to the main problem that the enlarged portion is too small for the blade access platform anyway.

The problem underlying is to facilitate easy and safe parking of bulky loads at a tower of an (offshore) wind turbine.

This problem is solved by a tower adapter with the features according to claim 1.

The tower adapter is securable on an outer surface of a tower, for example the tower of an (offshore) wind turbine, against falling, using tension load transfer means with at least one tension load pathway element being bowable.

The tower adapter includes:
Abutment means for abutment on the outer surface of the tower; and
a securing device for engagement with the tension load transfer means for securing the tower adapter against normal displacement away from the outer surface of the tower.

Further, the tower adapter is configured such that the abutment means secure the tower adapter against falling by frictional engagement with the outer surface of the tower when the tower adapter is secured (in particular with the at least one tension load pathway element) against normal displacement away from the outer surface of the tower by the engagement of the securing device with the tension load transfer means.

The tower adapter facilitates easy and safe parking of bulky loads at the tower of the (offshore) wind turbine. Especially, initially, the tower adapter can be secured to the outer surface of the tower. Then, the bulky load can be mounted to the tower adapter and/or placed on support structure that is mounted to the tower adapter.

The tower adapter is securable on the outer surface of the tower against falling, e.g. securable in a given vertical position (along a gravitational direction), using tension load transfer means with at least one tension load pathway element without needing vertical suspension of the tower adapter, e.g. from a nacelle, for example from a nacelle crane of the (offshore) wind turbine.

Actually, once the tower adapter is secured to the outer surface of the tower against falling as intended, the tower adapter remains in its vertical position at the tower surface without any vertical suspension of the tower adapter. No vertical cables are needed, at least not after the tower adapter has been correctly secured using the securing device. Such vertical cables have to be quite long in practice (up to the nacelle) and hence have a large wind-exposed area. Further, they can start to flutter or even into resonance under certain wind loads. It is hence beneficial to refrain from using vertical suspension for securing a bulky load, e.g. a blade access platform, or a support structure for supporting the blade access platform and/or a container, in parking position. Further, cables that are suspended form the nacelle requires that the offshore wind turbine is and remains stopped. In contrast, the tower adapter can be installed, be used and/or be deinstalled while the offshore wind turbine is in operation.

In other words, the tower adapter is for a tower adapter system for securing the tower adapter on the tower in a vertical position.

A state in which the securing device secures the tower adapter against normal displacement away from the outer surface of the tower may be referred to as "attached state".

The securing device ensures that the tower adaptor cannot laterally displace away from the outer surface, e.g. radially away with respect to a central axis of the tower. A tension engagement level is a vertical level where the tension load transfer means, in more detail the at least one tension load pathway element engage with the tower adapter, in more detail with the securing device.

The tension load transfer means can include, for example, a rope, a belt, a strap, a cable, and/or a chain. In more detail, the at least one tension load pathway element can include a rope, a belt, a strap, a cable, and/or a chain. This covers especially the case that the at least one tension load pathway element consists of (at least substantially) only a rope, a belt, a strap, a cable, and/or a chain.

As the at least one tension load pathway element is bowable, the tension load transfer means have a particularly low pack size. Further, the at least one tension load pathway element can easily adapt to a curved shape of the outer surface of the tower and to obstacles at the outer surface. Finally, since the tower adapter is suitable for being secured by the bowable the at least one tension load pathway element, mounting the tower adapter at the outer surface of the tower and deinstallation of the tower adapter from the outer surface are particularly easy. According to one aspect, the at least one tension load pathway element might be locally bowable in different directions. This can imply that adjacent segments along an elongation of the at least one tension load pathway element are bowable in at least two different directions that are not in a same plane. Especially, the at least one tension load pathway element might be freely bowable.

The tension load transfer means, e.g. the at least one tension load pathway element, are tensionable. Once the tension load transfer means are tensioned, be it due to a weight of the tower adapter (with weights of the additional loads supported by it, if any) and/or due to active tensioning using a tensioning mechanism as explained below, the engagement of the securing device with the tension load transfer means, e.g. with the at least one tension load pathway element, may serve as a pivoting axis. A weight of the tower adapter (with the weights of the additional loads supported by it, if any) causes a torque around the pivoting axis. This torque is used to press the abutment means (e.g. friction abutment pads as described below) against the tower surface, thereby causing a strong frictional engagement of the abutment means with the outer surface of the tower.

In the attached state, the tower adapter (with the additional loads supported by it, if any) is prevented from falling by the abutment means, more specifically by the frictional engagement of the abutment means with the outer surface of the tower. In other words, said frictional engagement of the abutment means with the outer surface of the tower holds the tower adapter in its vertical position. The securing device is rather to ensure the correct horizontal position of the tower adapter at the tower respect and to ensure that the weight force of the tower adapter (with the additional loads supported by it, if any) are used to cause sufficient "pressing force" (e.g. radially inwardly towards the central axis of the tower) for pressing the abutment means against the outer surface.

As already explained, in the attached state, the tower adapter is prevented from falling without using vertical suspension. In addition, in the attached state, it can be prevented from falling without using form-fit locking connections between the tower adapter and the tower. The towers do not need to be equipped with any form-fit locking connection means for vertically supporting the tower adapter in the attached state of the latter. The tower adapter can be used in a very flexible manner. The same tower adapter can be attached to the tower at various positions. Further, the same tower adapter can be attached to different towers.

The engagement between the tower adapter and the tower can be limited to the frictional engagement of the abutment means with the tower surface and the tensional engagement of the securing device with the tower, e.g. by engirding the outer surface with the least one tension load pathway element and securing it to the tower adapter with the securing device. This allows for easy installation and deinstallation.

In other words, the tower adapter may be configured such that tower adapter is, in the attached state, prevented from falling only by the frictional engagement of the abutment means with the outer surface of the tower. In this context, the lateral securing by the securing device is considered to as such not preventing the tower adapter from falling.

The tower adapter may be configured such that a vertical direction of the tower adapter is (at least substantially) parallel to a gravity direction and/or a longitudinal axis (the central axis) of the tower in the attached state. Typically, the longitudinal axis of the tower is (at least substantially) parallel to the gravity direction. Some inclination between the vertical direction of the tower adapter and the gravity direction / the longitudinal axis of the tower is tolerable. An inclination can, for example, result from that the outer surface of the tower adapter is slightly tapered and/or that the outer surface has irregularities (such as indentations, protrusions, etc.). For example, in this specific context, the term (at least substantially) parallel include a relative inclination up to 20°.

Additionally or alternatively, the tower adapter may be configured such that, in the attached state, a normal direction of the tower adapter is (at least substantially) parallel to a normal direction of the outer surface of the tower where the tower adapter is located. The normal direction of the outer surface (where the tower adapter is located) may correspond to a radial direction (where the tower adapter is located) with respect to the longitudinal axis of the tower. For example, in this specific context, the term (at least substantially) parallel include a relative inclination up to 20°.

Additionally or alternatively, the tower adapter may be configured such that, in the attached state, a tangential direction of the tower adapter is (at least substantially) parallel to a tangential direction of the outer surface of the tower where the tower adapter is located. The tangential direction of the outer surface (where the tower adapter is located) may correspond to a circumferential direction (where the tower adapter is located) with respect to the longitudinal axis of the tower. For example, in this specific context, the term (at least substantially) parallel include a relative inclination up to 20°.

The normal direction of the tower adapter may be perpendicular to the vertical direction of the tower adapter. The tangential direction of the tower adapter may be perpendicular to the normal direction of the tower adapter and/or to the vertical direction of the tower adapter.

In one embodiment, the tower adapter includes a tensioning mechanism for tensioning the at least one tension load pathway element for pressing the tower adapter onto the outer surface of the tower. This allows for particularly exact positioning of the tower adapter at the outer surface in the attached state. The at least one tension load pathway element can be "pre-tensioned" / biased.

For example, during installation of the tower adapter at the outer surface, the tower adapter might be supported vertically by support legs and/or vertically suspended (e.g. from a nacelle crane). Without pre-tensioning, removal of the support legs and/or the vertical suspension might result in that the tower adapter slides vertically a bit down on the outer surface and/or that an upper end of the tower adapter tilts a bit away from the outer surface, until the at least one tension load pathway element is tensioned by the weight force of the tower adapter (and the additional loads supported by it, if any) and said small displacement(s). Hence, without pre-tensioning, the position of the tower adapter might slightly change until a final position with the at least one tension load pathway element being tensioned is reached. The tensioning mechanism allows for actively tensioning the at least one tension load pathway element (e.g. including the a rope, a belt, a strap, a cable, and/or a chain) before the support legs are removed and/or before the vertical suspension (used during installation) is removed. Similarly, the active tensioning may facilitate the deinstallation of the tower adapter, e.g. attaching the vertical support legs before the at least one tension pathway element is removed.

For example, tensioning the at least one tension load pathway element prevents that the tower adapter slightly moves when additional loads are attached to the tower adapter. For example, if a blade access platform is parked on a support structure attached to the tower adapter, the additional weight of the blade access platform must be supported by the tower adapter. If the at least one tension load pathway element is not yet pre-tensioned by the weight of the tower adapter with the support structure (but without the weight of the blade access platform) and/or if the at least one tension load pathway element is only moderately pre-tensioned wherein the at least one tension load pathway element is elastic/yieldable (at least to some extent), the tower adapter could slightly move when the additional weight force the blade access platform is applied. Especially, the upper end of the tower adapter could tilt away a bit from the outer surface. The tensioning mechanism allows for sufficient pre-tensioning of the at least one tension load pathway element in order to maintain the tower adapter at a pre-determined position and alignment.

In more detail, the tensioning mechanism may form part of the securing device. In other words, the securing device may include the tensioning mechanism. Additionally or alternatively, the tension load transfer means may include the tensioning mechanism (maybe a further tensioning mechanism).

The tower adapter can be configured for "pulling" the tower adapter towards the outer surface of the tower, using the at least one tension load pathway element. The tension mechanism helps to ensure at least a minimum friction between the abutment means and the outer surface of the tower. The tower can be fixed precisely in the given vertical position.

The tensioning mechanism might not be confused with a means for vertically suspending the tower adapter (e.g. along a vertical cable) and/or a means for lifting the tower adapter along a vertical cable. According to one aspect, the tensioning mechanism is for tensioning the at least one tension load pathway element in a plane that is (at least) substantially perpendicular to the vertical direction of the tower adapter. In this specific context, the term "(at least) substantially perpendicular" may include cases in which a normal vector of said plan is inclined up to 20° with respect to the vertical direction of the tower adapter.

If there are several (i.e. at least two) tension load pathway elements, the tensioning mechanism may be configured for tensioning at least one of, several of, or all of the tension load pathway elements.

The tensioning mechanism may include several subunits for tensioning.

The tower adapter may include a main body.

The attachment means may be connected with the main body.

The securing device may be fixed to the main body and/or (at least partially) integrated into the main body.

For example, securing device may include the tensioning mechanism and/or guide elements for guiding the at least one tension load pathway element. The tensioning mechanism may be fixed to the main body. In one embodiment, the tensioning mechanism is detachably fixed to the main body. Some or all of the guide elements may be formed in the main body. Some or all of the guide elements may be fixed to the main body.

According to one aspect, the abutment means include at least one friction abutment pad. The friction abutment pad(s) are for frictional engagement with the outer surface of the tower.

Especially, the abutment means include several friction abutment pads, e.g. at least three friction abutment pads, maybe at least four friction abutment pads. In one embodiment, the abutment means includes exactly three or four friction abutment pads.

In one embodiment, the friction abutment pad(s) include at least one primary friction abutment pad located at a first abutment level along the vertical direction of the tower adapter. In other words, the at least one friction abutment pad can be such a primary friction abutment pad.

The securing device can be configured for engagement with the at least one tension load pathway element at the tension engagement level along the vertical direction of the tower adapter. The tension engagement level can be located at or above the first abutment level in the vertical direction of the tower adapter.

If the tension engagement level is above the first abutment level, it is clear that the first abutment level can automatically serve as the pivoting axis as described above. If the tension engagement level is at the first abutment level (and if there is no further relevant abutment level), the frictional engagement of the primary friction pad(s) at the first abutment level with the outer surface of the tower is still sufficient to prevent the tower adapter from falling, at least if the at least one tension load pathway element is sufficiently pre-tensioned.

According to one aspect, the abutment means include at least one secondary friction abutment pad located at a second abutment level along the vertical direction of the tower adapter. In other words, the tower adapter may include friction abutment pad arranged at least two different vertical levels. This helps to ensure a predetermined alignment of the tower adapter. For example, this may reduce or even prevent the tower adapter from tilting (e.g. such that an outer end along the normal direction tilts downwards) when additional load is applied.

Especially, the second abutment level can be located above the first abutment level in the vertical direction of the tower adapter.

In one embodiment, the tension engagement level is located above the first abutment level and at or below the second abutment level in the vertical direction of the tower adapter. This facilitates to maintain proper alignment of the tower adapter. For example, the outer end of the tower adapter will neither tilt downwards nor upwards if a tensioning force for tensioning the at least one tension load path element is changed or if the weight force applied to the tower adapter is changed.

The abutment at the second abutment level can serve as additional counter bearing for forces that arise from the tensioning.

Each friction abutment pad may be configured for (at least substantially) flat abutment on the outer surface. In other words, the friction abutment pad is not only configured for line contact with the outer surface but for contact with a contact area that extends along two direction, in particular over a substantial height along the vertical direction and a substantial tangential width along the tangential direction.

At least one of, several of, or all of the friction abutment pads may include a respect contact surface (for contact with the outer surface) comprising an elastomeric material. Especially, each friction abutment pad can include a contact surface comprising an elastomeric material. This helps to obtain a high friction between the friction abutment pad and the outer surface of the tower.

The contact surface and/or the friction abutment pad may have a curvature. This allows for better engagement with the round outer surface of the tower.

In one embodiment, the tower adapter includes the main body and at least two (maybe detachable) support legs. The support legs are detachably mountable to the main body, e.g. at a lower side of the main body. The support legs can be mounted for vertically supporting the tower adapter during the installation at the tower and/or deinstallation of the tower adapter from the tower. The tower adapter can vertically rest on the balcony section of the tower by means of the support legs. This allows to establish and/or release the engagement of the tower adapter with the tower via the load transfer means in a safe manner.

The support legs being detachable facilitates the transportation of the tower adapter. It also facilitates the lifting onto the balcony section of the tower. Additionally or alternatively, each support leg can be (as such) dismantlable into parts.

Apart from that, detaching the vertical support legs while the tower adapter is in the attached state allows that the balcony section is kept free of obstacles. Staff can pass on the balcony section below the tower adapter easily then. It is one goal to allow easier access underneath the support structure while the vertical support legs are removed. Naturally, the vertical support legs can be kept installed in a working situation if they are not disturbing/taking too much space.

In one embodiment, the tower adapter includes at least one standing platform for a worker. For example, the standing platform can be configured to be used by the worker for operating the tensioning mechanism.

Optionally, the at least one standing platform is detachable and/or can be folded in. This facilitates the transportation of the tower adapter. Further, the at least one standing platform can detached/folded in when the support structure and/or an additional load is mounted to the tower adapter. The at least one standing platform is not an obstacle then.

Especially, the tower adapter can include at least two standing platforms.

The tower adapter may include at least one ladder. For example, the tower adapter may include a ladder for accessing the operating platform(s) from the balcony section. Additionally or alternatively, the tower adapter may include a latter for accessing the support structure from the balcony section.

The problem mentioned above is further solved by a tower adapter system.

The tower adapter system comprises a tower adapter according to the present invention and at least one of the following:
the tension load transfer means; and
the support structure for supporting bulky loads, wherein the support structure is fixed or mountable to the tower adapter.

Naturally, this means that the tower adapter system can includes both the tension load transfer means and the support structure.

The embodiments, modifications, and advantages described regarding the tower adapter, the tensioning means, and the support structure may apply accordingly regarding the tower adapter system respectively, and vice versa.

In one embodiment, the tower adapter system includes the tension load transfer means, wherein the at least one tension load pathway element includes a rope, a belt, a strap, a cable, and/or a chain.

As noted above, the tension load transfer means can include at least one tensioning mechanism for tensioning the at least one tension load pathway element.

According to one aspect, the at least one tension load pathway element includes ultra-high-molecular-weight polyethylene fibers. Especially, the at least one tension load pathway element can (at least substantially) consist of ultra-high-molecular-weight polyethylene fibers. Accordingly, the tension load pathway element is particularly lightweight but still strong. It is particularly easily bowable. This allows transportation and handling. Furthermore, it can have some elasticity. This is beneficial for the (pre-)tensioning with the tensioning mechanism. Still further, it is corrosion-resistant against seawater.

In one embodiment, the tower adapter system includes the support structure, wherein the support structure extends away from the outer surface of the tower when the tower adapter is secured on the outer surface of the tower and the support structure is fixed or mounted to the tower adapter. In other words, the support structure may extend along the normal direction away from the tower adapter and the tower surface. With this, it is particularly easy to lift additional loads, e.g. the blade access platform, onto and off from the support structure.

The support structure may be a parking mount for parking a blade access platform. Additionally or alternatively, the support structure may be configured for supporting a freight container. The freight container can be placed upon the support structure. The freight container (and its contents) then are additional load for the tower adapter. For example, the freight container might be used to store maintenance equipment, spare parts, and/or the like.

The problem mentioned above is further solved by a method for securing a tower adapter, for example according to the present invention, on an outer surface of a tower, for example the tower of an (offshore) wind turbine, against falling using a tension load transfer means, the latter including at least one tension load pathway element.

The method includes:
positioning the tower adapter at the outer surface of the tower; and
securing the tower adapter against normal displacement away from the outer surface of the tower using a securing device engaging with the tension load transfer means;
preventing the tower adapter against falling by frictional engagement of abutment means of the tower adapter abutting on the outer surface of the tower.

The embodiments, modifications, and advantages described regarding the tower adapter, the tensioning means, the support structure, and the tower adapter system may apply accordingly regarding the method, respectively, and vice versa.

In more detail, the tower adapter may be positioned (attached to the tower) at a vertical position above a balcony section of the tower (but e.g. far lower than a nacelle).

Additional features, advantages and possible applications of the invention result from the following description of exemplary embodiments and the drawings. All the features described and/or illustrated graphically here form the subject matter of the invention, either alone or in any desired combination, regardless of how they are combined in the claims or in their references back to preceding claims.

Preferred embodiments of the invention will now be described with reference to the drawings, in which:
- Fig. 1: is a perspective view of an embodiment of a tower adapter according to the present invention;
- Fig. 2: is a top view on the tower adapter of Fig. 1;
- Fig. 3: is a side view on the tower adapter of Fig. 1;
- Fig. 4: is a front view on the tower adapter of Fig. 1;
- Fig. 5: is a perspective view on a section of tower of an offshore wind turbine, wherein the section comprises a balcony section and wherein the tower adapter of Fig. 1 is attached to the tower above the balcony section;
- Fig. 6: is a front view (with respect to the tower adapter) of the arrangement shown in Fig. 5;
- Fig. 7: is top view of the arrangement shown in Fig. 5;
- Fig. 8: is an enlarged section of Fig. 7 with the tower adapter;
- Fig. 9: is a perspective view of a modification of the arrangement shown in Fig. 5;
- Fig. 10: is a perspective view of a support structure that can be detachably mounted onto the tower adapter of Fig. 1;
- Fig. 11: is a perspective view of the arrangement shown in Fig. 5, wherein the support structure of Fig. 10 is additionally mounted onto the tower adapter;
- Fig. 12: is another perspective view of the arrangement shown in Fig. 11:
- Fig. 13: is a magnified section of Fig. 12 showing a hinge-like engagement of an upper, tower-side end of the support structure with an upper end of the tower adapter;
- Fig. 14: is a side view of the support structure of Fig. 10;
- Fig. 15: is a perspective view of the arrangement shown in Fig. 11, wherein a blade access platform is additionally parked on the support structure;
- Fig. 16: is a perspective view of the arrangement shown in Fig. 11, wherein a freight container is additionally parked on the support structure;
- Fig. 17: is a perspective view on an enlarged portion of a balcony section of a tower of an offshore wind turbine, e.g. as in Fig. 5, wherein a Davit crane is located at the enlarged portion and the parts of the disassembled tower adapter are placed on the enlarged portion;

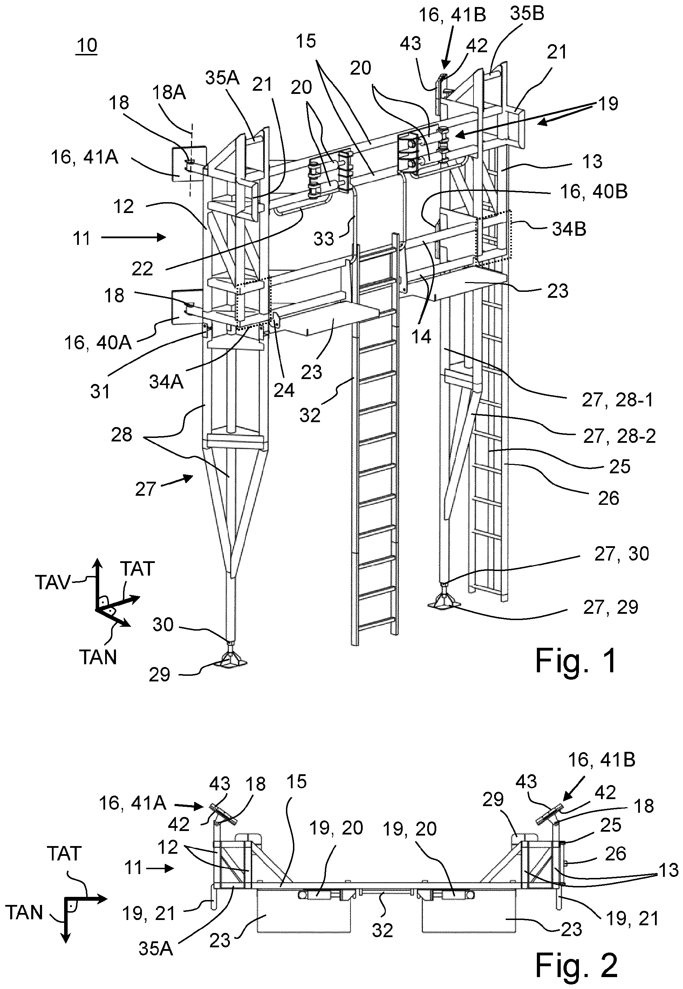

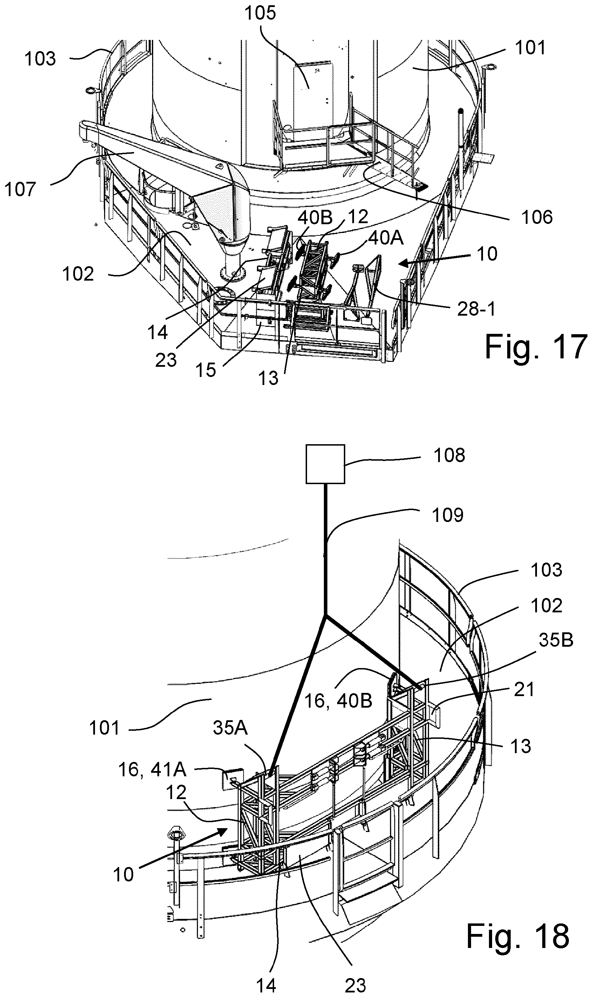

- Fig. 18: is a perspective view, in which a core portion of the tower adapter shown in Figs. 1 and 17 is placed on the balcony section at an outer surface of the tower, wherein the core portion is attached to a nacelle crane of the offshore wind turbine and ready to be lifted up to a desired vertical position above the balcony section at which the core portion shall be attached to the outer surface, wherein the core portion includes an assembled main body of the tower adapter with abutment means installed on the main body and with securing device including a tensioning mechanism installed on the main body;
- Fig. 19: is a perspective view, in which the core portion of the tower adapter has been lifted up to the desired vertical position by the nacelle crane, wherein detachable support legs of the tower adapter have been installed at a lower side of the main body of the tower adapter to vertically support the tower adapter at least during further installation, and wherein an initial strap for temporarily securing the tower adapter laterally at the outer surface of the tower has been guided around the tower and is ready to be lifted to a correct position and to be tension;
- Fig. 20: is a perspective view showing a situation where the initial strap has been tensioned;
- Fig. 21: is a perspective view showing a situation in which the load transfer means consisting of two tension load pathway elements have been guided around the tower surface and are ready to be lifted to correct position;
- Fig. 22: is a perspective view of a trolly that might help to bring the tension load transfer means into the correct position;
- Fig. 23: is a side view of the trolly of Fig. 22 with the two load transfer pathway elements of the tension load transfer means guided therein;
- Fig. 24: is schematic front view of the situation shown in Fig. 23;
- Fig. 25: schematically shows how a worker uses the trolly of Fig. 22; and
- Fig. 26: is a perspective view of the core portion of the tower adapter that is attached to the outer surface of the tower at the desired vertical position, using the tension load transfer means including two tension load pathway elements, wherein a worker is standing on a standing platform for using a tensioning mechanism in order to further tension the two tension load pathway elements.

Fig. 1 shows a perspective view of an embodiment of a tower adapter 10 according to the present invention.

The tower adapter 10 has a vertical direction TAV, a normal direction TAN, and a tangential direction TAT. Both the normal direction TAN and the tangential direction TAT of the tower adapter 10 are perpendicular to the normal direction TAN of the tower adapter 10. Further, the normal direction TAN and the tangential direction TAT of the tower adapter 10 are perpendicular to each other.

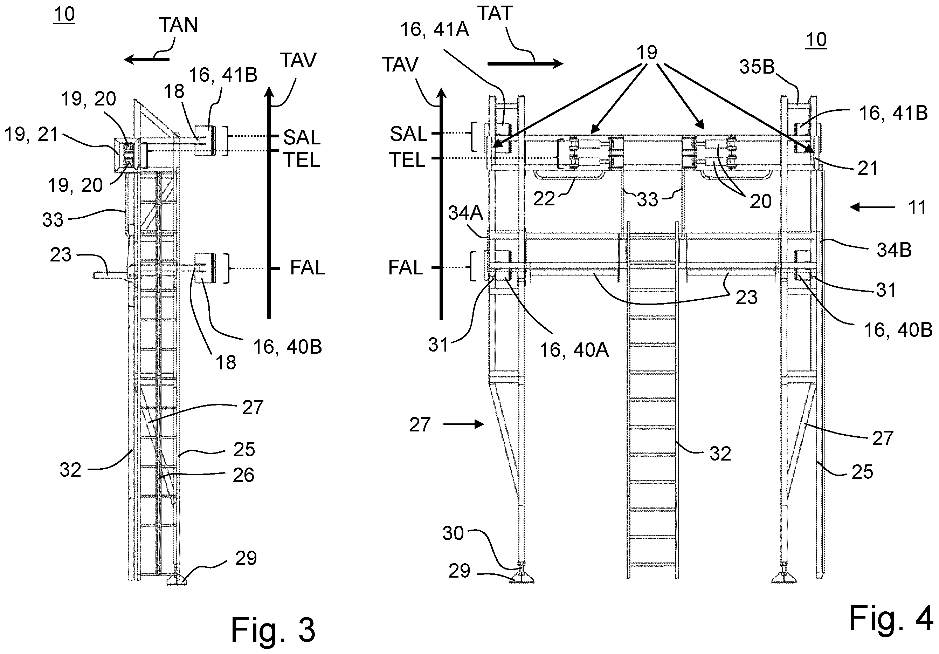

Fig. 2 shows a top view of the tower adapter 10, i.e. from above along opposite to the vertical direction TAV. Fig. 3 shows a side view of the tower adapter 10, i.e. from a left side and along the tangential direction TAT. Fig. 4 shows a front view of the tower adapter 10, i.e. from a front side and opposite to the normal direction TAN.

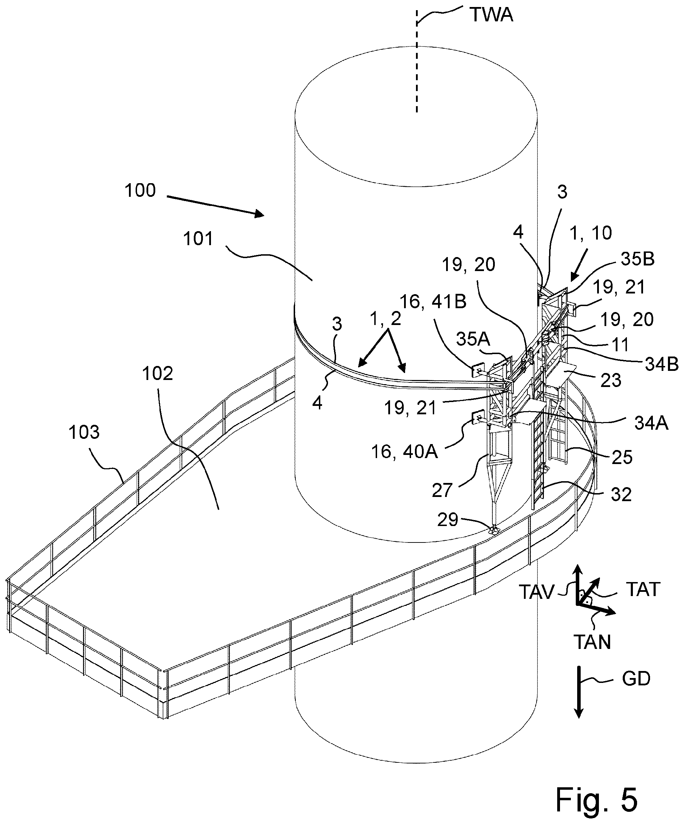

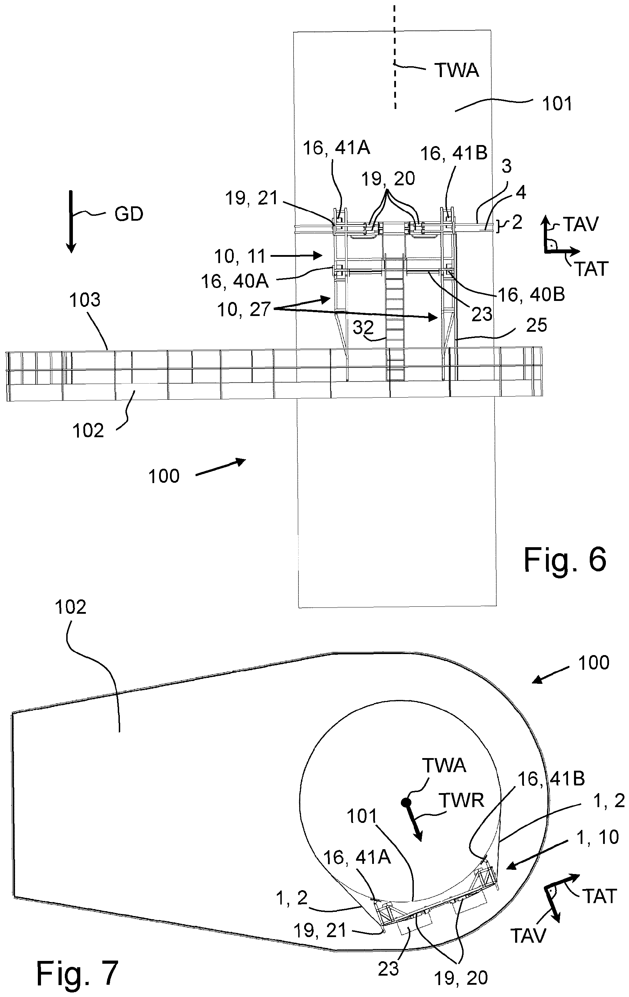

The tower adapter 10 is securable against falling on an outer surface 101 of a tower 10 of an offshore wind turbine using tension load transfer means 2 with at least one tension load pathway element 3, 4, 3A, 3B, 4A, 4B, see Figs. 5 to 9, 11, 12, 15, 16, and 26. Especially, the tower adapter 10 can be secured at the outer surface 101 of the tower 100 at a desired vertical position.

The tower adapter 10 includes a main body 11. In this example, the main body 11 has a frame structure including vertical segments 12, 13 and tangential segments 14, 15. The vertical segments 12, 13 extend parallel to the vertical direction TAV and the tangential segments 14, 15 extent parallel to the tangential direction TAT.

The tower adapter 10 further includes abutment means 16 that are installed at the main body 11, optionally with hinges 18.

Still further, the tower adapter 10 includes securing device 19 with a tensioning mechanism 20 and guide elements 21.

The main body 11 with the abutment means 16 and the securing device 19 can be referred to as a core portion of the tower adapter 10.

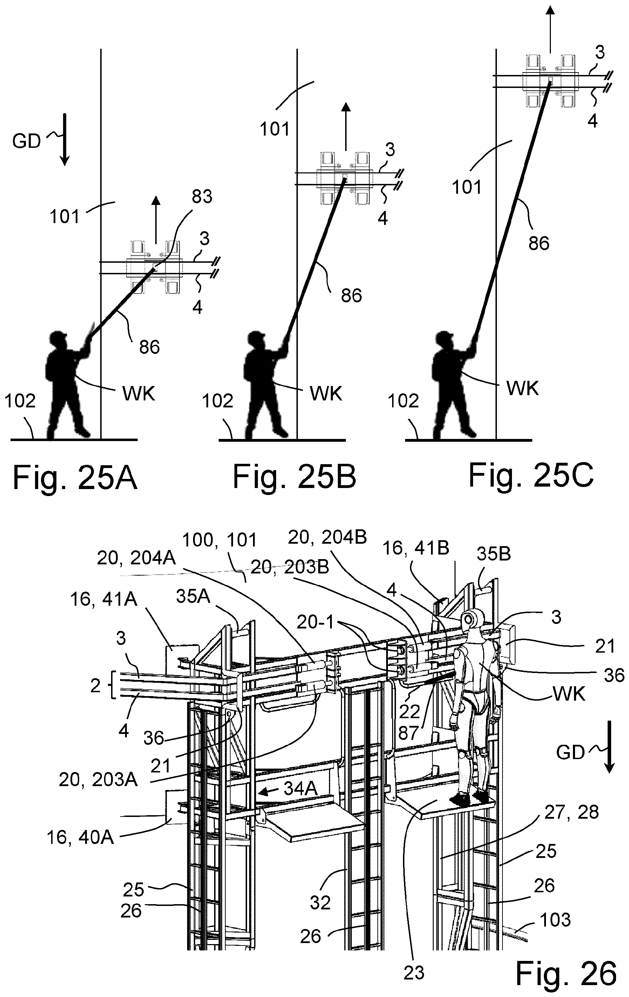

The tower adapter 10 further includes two safety bars 22 associated with two standing platforms 23. The standing platforms 23 are connected to the main body 11, in more detail to the lower tangential segment 14, via hinges 24. The standing platforms 23 can be folded in as shown in Figs. 17 and 18 or folded out for use as shown, for example, in Figs. 1 and 26.

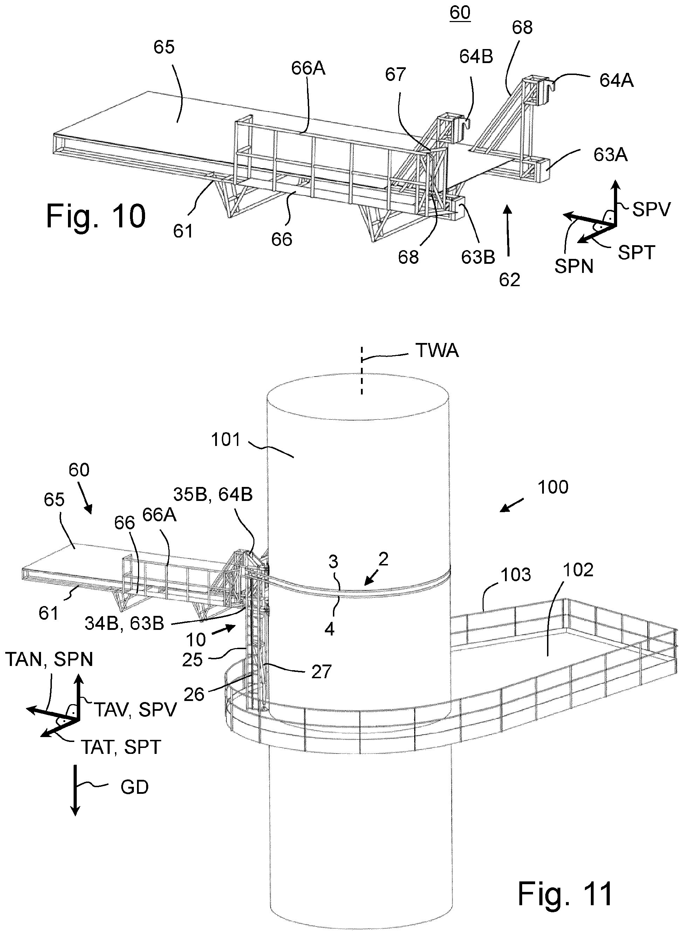

The tower adapter 10 can comprise a ladder 25 for allowing staff to access a support structure 60, which is mounted to the tower adapter 10, e.g. from a balcony section 102 of the tower 100 of the offshore wind turbine (see, for example, Fig. 11). An upper part of the ladder 25 is detachably fixed onto one end of the main body 11 along the tangential direction TAT. The ladder 26 may further include a security rail 26 for securing staff that climbs up and down the ladder 25. In Fig. 26, the tower adapter 10 has two ladders 25, one at each end along the tangential direction TAT.

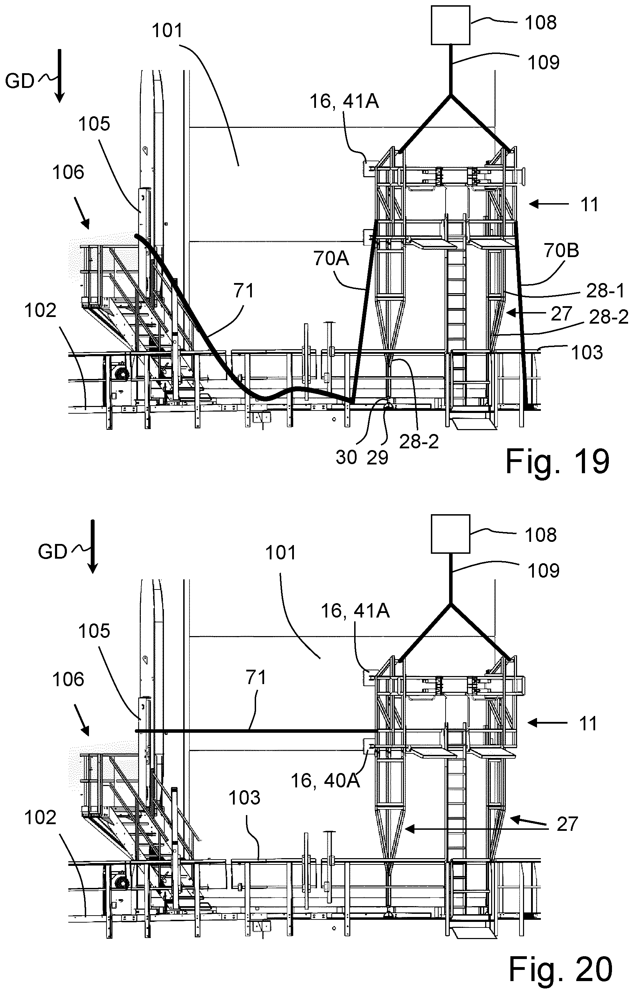

Optionally, the tower adapter 10 has one or more vertical support legs 27 at a lower side of the main body 11 for vertically supporting the tower adapter 10, e.g. on the balcony section (see, for example, Figs. 5, 6, 9, 11, 12, 15, 16, and 19 to 21). In this embodiment, the vertical support legs 27 can be detachably mounted a lower side of the main body 11. They may be especially attached and used during the installation of the tower adapter 10 at the outer surface 101 in the desired vertical position as shown in Figs. 19 to 21 and during a deinstallation of the tower adapter 10. Fig. 18 shows the core portion of the tower adapter 10 without the vertical support legs 27.

Each vertical support leg 27 may include adjustment mechanism 30 for adjusting a height of the support leg 27. The adjustment mechanism 30 can be used for compensation if the balcony section 102 is not completely even and/or if the tower adapter 10 must be installed with slight inclination of the tangential direction TAT with respect to a horizontal plane (that is perpendicular to a gravity direction GD). In the exemplary embodiment, the adjustment mechanism 30 allows the adjust a height with which a foot portion 29 of the support leg 27 protrudes from a main portion 28. The foot portions 29 may be spindle feet.

It is possible that the vertical support legs 27 itself are dismantlable. For example, the main portions 28 might be dismantlable into two sections 28-1 and 28-2. Additionally or alternatively, the foot portions 29 may be detachable.

When the tower adapter 10 is in the attached state (e.g., see Figs. 5 to 9, 11, 12, 15, 16, and 26), the support legs 27, the ladder 32, and/or the ladder(s) 25 can be detached such that the staff can pass on the balcony section 102 below the rest of the tower adapter 10 with less obstacles.

The tower adapter 10 optionally also comprises a detachable ladder 32 for allowing a worker WK (the worker WK is shown in Fig. 26) to access the standing platforms 23 from the balcony section 102. The ladder 32 can be detachably fixed to the front side of the main body 11 in-between the two standing platforms 23. The ladder 32 can, similar as the ladder 25, include a security rail 26 (see Fig. 26, not shown in Fig. 1), e.g. a fall-arrest glide rail. The main body 11 can have on or more (vertical) handles 33 next to an upper end portion of the ladder 32. The worker WK can grab one of these handles 33 and/or use the handle 33 for securing when stepping from the ladder 32 to the standing platform 23 or vice versa. The tower adapter 10 includes contact portions 34A, 34B at its front side, in more detail at a lower end portion of the main body 11. The contact portions 34A, 34B are configured for abutment of corresponding contact portions 63A, 63B of the support structure 60 when the support structure 60 is attached to the tower adapter 10.

Further, the tower adapter 10 includes hook-receiving means 35A, 35B. The hook-receiving means 35A, 35B are arrange on an upper end portion of the main body 11. In more detail, one hook-receiving means 35A, 35B is provided at each upper end portion of the vertical segments 12, 13. The hook-receiving means 35A, 35B can be arrange above the upper horizontal segment 15.

Fig. 26 shows optional anchor points 36 adjacent to the ladders 32. They can be used for securing the worker WK when stepping from the ladder 25 to the support structure 60 or vice versa.

Figs. 5 to 8 are different views of a situation where the tower adapter 10 is in the attached state.

In the attached state, the securing device 19 is engaged with tension load transfer means 2 for securing the tower adapter 10 (at least the core portion thereof) against normal displacement away from the outer surface 101.

In general, the tension load transfer means 2 include at least one tension load pathway element 3, 4.

Optionally, and as shown in all exemplary embodiments, all tension load transfer means 3, 4, 3A, 3B, 4A, 4B may be provided as pairs for redundancy.

The tension load pathway elements 3, 4 are bowable. Each tension load pathway element 3, 4 is an elongated element that can be tensioned and can transfer tension loads (tensile loads). Especially, one of, several of, or all of the tension load pathway elements might be locally bowable in different directions. This can imply that adjacent segments along the elongation can be bowed in at least two different directions that are not in a same plane. According to one aspect, one of, more of, or all of the tension load pathway elements 3, 4 might be freely bowable. Freely bowable might imply mean that adjacent segments along the elongation can be arbitrarily bowed in any desired direction independently. Additionally or alternatively, freely bowable mean that the tension load pathway element 3, 4 cannot bear compressive loads along its elongation. Additionally or alternatively, the tension load pathway element 3, 4 is windable.

Each tension load pathway element 3, 4 can include a rope (i.e. at least one rope), a belt (i.e. at least one belt), a strap (i.e. at least one strap), a cable (i.e. at least one cable), and/or a chain (i.e. at least one chain).

In the exemplary embodiments, the tension load pathway elements 3, 4 are ropes that are made of ultra-high-molecular-weight polyethylene fibers. Such ropes offer a good ratio between tensile strength and weight. Further, they are durable, e.g. resistant against seawater. Further, for example in comparison to chains, they are freely bowable in a particularly easy manner and are smoother. This reduces a risk that the outer surface 101 itself and/or features at the outer surface 101 of the tower 100, e.g. lamps, cables, windows, and/or the like, are damaged by the tension load pathway element 3, 4.

The tension load pathway elements 3, 4 can have a polyurethane coating.

In Figs. 5 to 8, 11, 12, 15, 16, 21 to 25C, and 26, the tension load transfer means 2 include two redundant tension load pathways elements 3, 4 for engirding the outer surface 101 of the tower 100 (at least between adapter-side ends of the tension load pathway elements 3, 4 that are engaged with the tower adapter 10, in particular with the securing device 19).

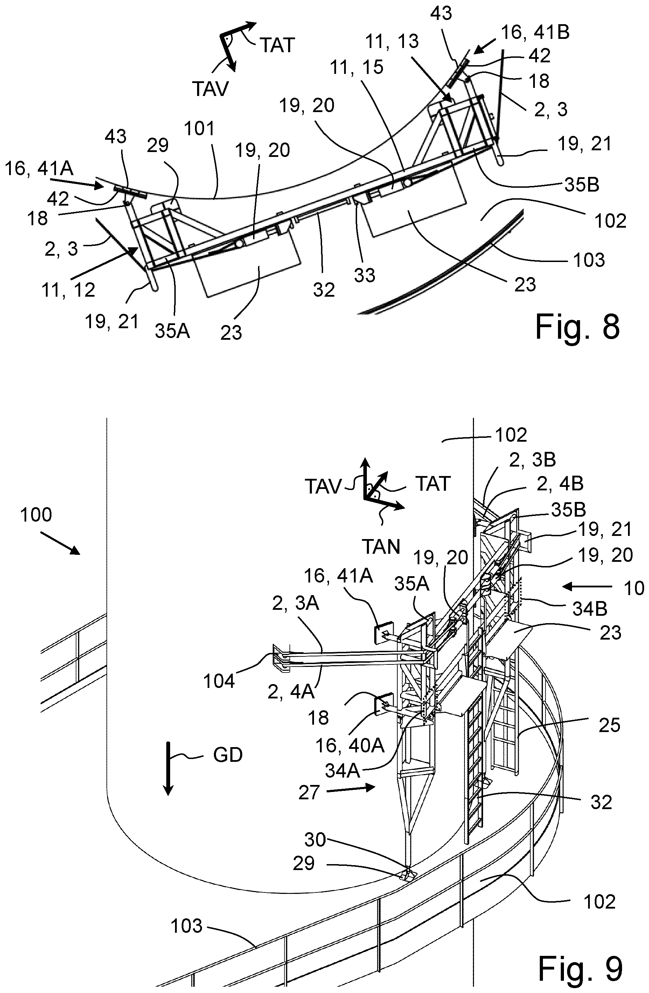

In the modification shown in Fig. 9, the outer surface 101 of the tower 100 has fixation means 104 for fixing non-adapter-ends of the tension load pathway elements 3A to 4B. Accordingly, the non-adapter-ends are fixed to the tower 100, namely to a portion facing at least laterally away from the tower adapter 10. Hence, the tension load pathway elements 3A to 4B do not need to engird the whole outer surface 102 (between their adapter-side ends). It should be noted that Fig. 9 shows only fixation means 104 at the left side of the tower adapter 10. Corresponding fixation means are provided on the other side of the tower adapter 10 but cannot be seen in Fig. 9 due to the perspective.

Accordingly, in the modification shown in Fig. 9, the tension load transfer means 2 include a first pair of tension load pathway elements 3A, 4A for the left side of the tower adapter 10 and a second pair of tension load pathway elements 3B, 4B for a right side of the tower adapter 10.

In the exemplary embodiments, the core portion of the tower adapter 10, in more detail the securing device 19, includes the tensioning mechanism 20. The tensioning mechanism 20 is attached to the main body 11. For each of the tension load pathway elements (ropes) 3, 4, 3A, 3B, 4A, 4B, it includes at least one individual subunit 203A, 204B, 204A, 204B for tensioning said the respective tension load pathway elements 3, 4, 3A, 3B, 4A, 4B. For example, the subunits 203A, 204B, 204A, 204B can be adjustable fasteners, e.g. rigging screws/turnbuckles. The worker WK may turn a corresponding screw element 20-1 to gradually fasten or release the corresponding tension load pathway element 3, 4, 3A, 3B, 4A, 4B with the adjustable fastener.

In Figs. 5 to 8, 11, 12, 15, 16, and 26, two of the subunits 203A, 204B, 204A, 204B of the tensioning mechanism 20 are engaged with the same tension load pathway element 3, 4, respectively. In the modification shown in Fig. 9, each of the four subunits 203A, 204B, 204A, 204B of the tensioning mechanism 20 engages with exactly one of the four tension load pathway elements 3A, 3B, 4A, 4B.

In more general, the tension load transfer means 2 itself and/or the tower 100 may include the tensioning mechanism or at least parts thereof. For example, one of, several of, or all of the tension load pathway elements 3, 4, 3A, 3B, 4A, 4B could include a respective rigging screw/turnbuckle and/or another fastener (not shown), in addition or alternatively to the shown ones of the tower adapter 10. Furthermore, in addition or alternatively, the fixation means 104 of the tower 100 could include rigging screws/turnbuckles and/or other adjustable fasteners.

With respect to the vertical direction TAV of the tower adapter 10, the tensioning mechanism 20, in particular the subunits 203A to 204B, are located at a tension engagement level TEL, see Figs. 3 and 4. The tension mechanism 20 is provided in the same area along the vertical direction TAV at as the upper tangential segment 15 of the main body 11. The subunits 203A to 204B are installed at the upper tangential segment 15.

The securing device 19 further includes the guiding elements 21. In the exemplary embodiments, the guiding elements 21 are formed integrally with the main body 11. In more detail, the guiding elements 21 include at least one guiding passage for the tension load pathways elements 3, 4, 3A, 3B, 4A, 4B at each end of the main body 11 in the tangential direction TAT. With respect to the vertical direction TAV, said guiding passages are arrange at the tension engagement level TEL.

The tension mechanism 20 is configured to tension the tension load pathways elements 3, 4, 3A, 3B, 4A, 4B in a plane that is at least substantially perpendicular to the vertical direction TAV. In the exemplary embodiments, since the adapter-side ends of the tension load pathways elements 3, 4, 3A, 3B, 4A, 4B are fixed to the tensioning mechanism 20 and since the tension load pathways elements 3, 4, 3A, 3B, 4A, 4B are further guided by the guiding elements 21 (i.e. guided through the guiding passages), the tensioning mechanism applies tensioning forces for tensioning the tension load pathways elements 3, 4, 3A, 3B, 4A, 4B, to the adapter-side end portions, wherein said tensioning forces are at least substantially parallel to the tangential direction TAT. Naturally, the tension load pathways elements 3, 4, 3A, 3B, 4A, 4B are bowed at least at the guiding elements 21 to run towards the outer surface 101 of the tower 100 such that tensile loads transferred along the tension load pathways elements 3, 4, 3A, 3B, 4A, 4B may locally run according to other directions "outside" of the tower adapter 10. However, these other directions may be at least substantially perpendicular to the vertical direction TAV and/or the gravity direction GD as well, at least when the tension load pathways elements 3, 4, 3A, 3B, 4A, 4B are optimally positioned and are tensioned.

The abutment means 16 include several friction abutment pads 40A, 40B, 41A, 41B. Each friction abutment pad 40A, 40B, 41A, 41B can be mechanically connected to the main body 11 via a corresponding hinge 18. The hinge 18 may allow tilting of the friction abutment pad 40A, 40B, 41A, 41B relative to the main body 11 about a corresponding hinge axis 18A (see Fig. 1, upper left corner). The hinge axis 18A may be (at least substantially) parallel to the vertical direction TAV. This allows adapting the tower adapter 10 for use at different towers 100 and/or at different vertical positions on the same tower 100. As the tower 100 is typically slightly tapered, a tower diameter typically decreases for higher vertical positions.

In the exemplary embodiments, the abutment means 16 include four friction abutment pads 40A, 40B. With respect to the vertical direction TAV of the tower adapter 10, two friction abutment pads 40A, 40B arranged at a first abutment level FAL (see Figs. 3 and 4). They are referred to as primary friction abutment pads 40A, 40B. With respect to the vertical direction TAV of the tower adapter, two friction abutment pads 41A, 41B are arranged at a second abutment level SAL. They are referred to as secondary friction abutment pads 41A, 41B.

The first abutment level FAL is arranged below the tension engagement level TEL.

As long as the tension load pathways elements 3, 4, 3A, 3B, 4A, 4B are secured to the security device 19 and to the tower 100 after installation of the tower adapter 10 to the tower 100, the tower adapter 10 will not fall down when the vertical support legs 27 are removed and/or the vertical suspension from a nacelle crane 108 (see Figs. 18 to 20) is released even if the worker WK forgot or did not complete the pre-tensioning with the tensioning mechanism 20. The tower adapter will slide a bit down at the outer surface 101 and/or the upper end of the tower adapter 10 will tilt a bit outwardly (i.e. away from the outer surface 101), with the primary friction abutment pads 40A, 40B defining a pivoting axis, until the tension load pathways elements 3, 4, 3A, 3B, 4A, 4B are tensioned due to said slight changes in the vertical position and/or alignment of the tower adapter 10 ("passive" tensioning). After that, no further substantial change in the position and alignment of the tower adapter 10 will occurs since the frictional engagement of the primary friction abutment pads 40A, 40B with the outer surface 101 holds the tower adapter 10 in place.

With respect to the vertical direction TAV, the second abutment level SAL is located above the first abutment level FAL. Further, it is located at and/or above the tensile engagement level TEL. As can be seen in Fig. 3 and 4, in the exemplary embodiments, the second abutment level SAL is slightly higher than the tensile engagement level TEL but overlaps with the latter. Due to the overlap, the secondary friction abutment pads 41A, 41B are the most important "counter bearings" for actively tensioning the tension load pathways elements 3, 4, 3A, 3B, 4A, 4B by the tensioning mechanism 20. The secondary friction abutment pads 41A, 41B are firmly pressed against the outer surface 101 by the active tensioning. However, since the tensile engagement level TEL is partly arranged in-between the first abutment level FAL and the second abutment level SAL, the active tensioning presses the primary friction abutment pads 40A, 40B also against the outer surface 101. Hence, there is frictional engagement of the abutment means 16 at four different areas. This ensures that the position of the tower adapter 10 is fixed, both regarding the vertical position and the tangential position at the outer surface 101.

Each of the friction abutment pads 40A, 40B, 41A, 41B includes a support plate 42 made of metal and contact surface 43 with comprising elastomeric material. For example, the contact surface 43 is formed by at least one elastomeric pad that is fixed to the backplate 42 at the side of the backplate 42 for facing towards the outer surface 101. On each individual friction abutment pad 40A, 4B, 41A, 41B, the contact surface 43 and/or the elastomeric pad(s) might have a size of at least 200 cm², maybe at least 500 cm². The size might be 3000 cm² at the maximum, maybe 1600 cm² at the maximum.

Optionally the tower adapter 10 includes a position adjustment mechanism for one of, several of, or all of the friction abutment pads 40A, 40B, 41A, 41B (not shown). With the position adjustment mechanism, a relative position of the corresponding friction abutment pad 40A, 40B, 41A, 41B along the normal direction TAN with respect to the main body 11 can be adjusted (varied and locked). This allows further adaption of the abutment means 16 to a shape of the outer surface 101 (e.g. its tapering).

As already mentioned above, Figs. 5 to 9 show the tower adapter 10 in the attached state. The tower adapter 10 is laterally (along the normal direction TAN) secured at the outer surface 101 of the tower 100 using the tension load pathways elements 3, 4, 3A, 3B, 4A, 4B. The tension load pathways elements 3, 4, 3A, 3B, 4A, 4B are firmly pre-tensioned with the tensioning mechanism 20. The frictional engagement between the friction abutment pads 40A, 40B, 41A, 41B prevents the tower adapter 10 from changing its position.

A tower adapter system 1 includes at least the tower adapter 10 and further the support structure 60 and/or the tension load transfer means 2 (see, for example Fig. 5).

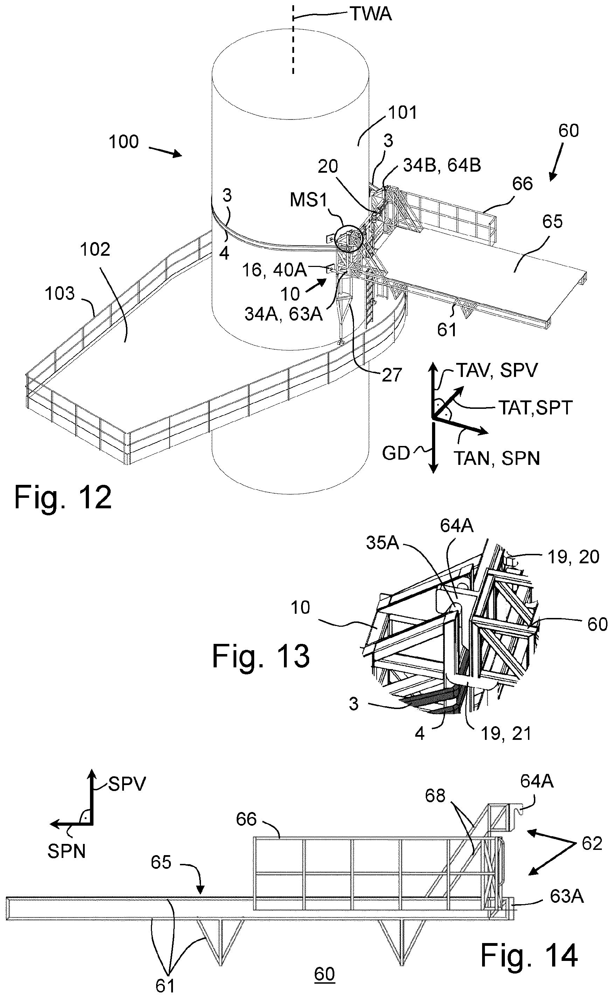

Fig. 10 is a perspective view of the support structure 60, and Fig. 14 is a side view of the latter. The support structure 60 comprises a main body 61 with a mounting interface 62. The mounting interface 62 is adapted for engagement with a corresponding mounting interface of the tower adapter 10. The support structure 60 can be detachably mounted to the tower adapter 10 by the mounting interface 62 of the support structure 60 engaging a corresponding mounting interface of the tower adapter 10.

When the support structure 60 is mounted (see Figs. 11 to 13), a vertical direction SPV of the support structure 60 corresponds to the vertical direction TAV of the tower adapter 10, a normal direction SPN of the support structure 60 corresponds to the normal direction TAN of the tower adapter 10, and a tangential direction SPT of the support structure 60 corresponds to the tangential direction TAN of the tower adapter 10.

The mounting interface of the tower adapter 10 is adapted for mounting the support structure 60 thereto. In the exemplary embodiments, the mounting interface of the tower adapter 10 includes the contact portions 34A, 34B and the hook-receiving means 35A, 35B. Fig. 13 shows a

The mounting interface 62 of the support structure 60 includes hooks 64A, 64B for engaging with the hook-receiving means 35A, 35B and pressure pads 63A, 63B for abutment onto the contact portions 34A, 34B.

The hooks 64A, 64B engagement with the hook-receiving means 35A, 35B form a hinge-like engagement.

In more general, upper interface means (here the hooks 64A, 64B and the hook-receiving means 34A, 34B) may be configured to engage with a hinge-like engagement. In other words, the engagement vie the upper interface means allows for one degree of freedom.

The upper interface means are subject to tensile loads. In the vertical directions TAV, SAC, the upper interface means may be at and/or adjacent to the tension engagement level TEL. In the exemplary embodiments, it is adjacent to, namely slightly above the tension engagement level TEL. This ensures good transfer of the tensile loads applied to the tower adapter 10 via the upper interface means to the tension load transfer means 2.

Lower interface means (here the pressure pads 63A, 63B and the contact portions 34A, 34B) are configured to engage such that at least forces against the normal direction TAN of the tower adapter 10 can be transferred.

The support structure 60 could in principle swivel around a horizontal axis along the hook-receiving means 35A, 35B. The weight force of the support structure 60 causes that an end of the support structure 60 facing away from the mounting interface 62 swivels downward until the pressure pads 63A, 63B abut onto the contact portions 34A, 34B.

At least a part of the weight force of the support structure 60 (and of any additional objects placed on the support structure 60) are "converted" by the hinge-like engagement of the upper interface means into torques that in turn cause forces against (opposite to) the normal direction TAN to be transferred by the lower interface means into the tower adapter 10.

With respect to the vertical direction TAV of the tower adapter 10, the contact portions 34A, 34B overlap with the first abutment level FAL (see Fig. 4). Hence, the forces opposite to the normal direction TAN of the tower adapter 10 act directly as forces for pressing the primary friction abutment pads 40A, 40B onto the outer surface 101 of the tower 100. They hence directly increase the frictional engagement of the primary friction abutment pads 40A, 40B with the outer surface 101.

The exemplary support structure 60 comprises a storage area 65. The storage area 65 is supported by the main body 61. It can be part of the main body 61. Fig. 11 shows that a worker (not shown in Fig. 11) can easily access the storage area 65 from the balcony section 102 via the ladder 25. Optionally, the support structure can include a walkway 66 with a handrail 66A on at least a part of a periphery of the storage area 65. A door 67 can be provided where the walkway 66 faces the ladder 25. Slanted struts 67 between the mounting interface 62 and the main body 61 can improve the stiffness. A handle 68 (see Fig. 10) of the support structure 60 is adjacent to the upper end portion of the ladder 25 and can be used by the worker for holding and/or for securing when stepping from the ladder 25 onto the walkway 66 or vice versa.

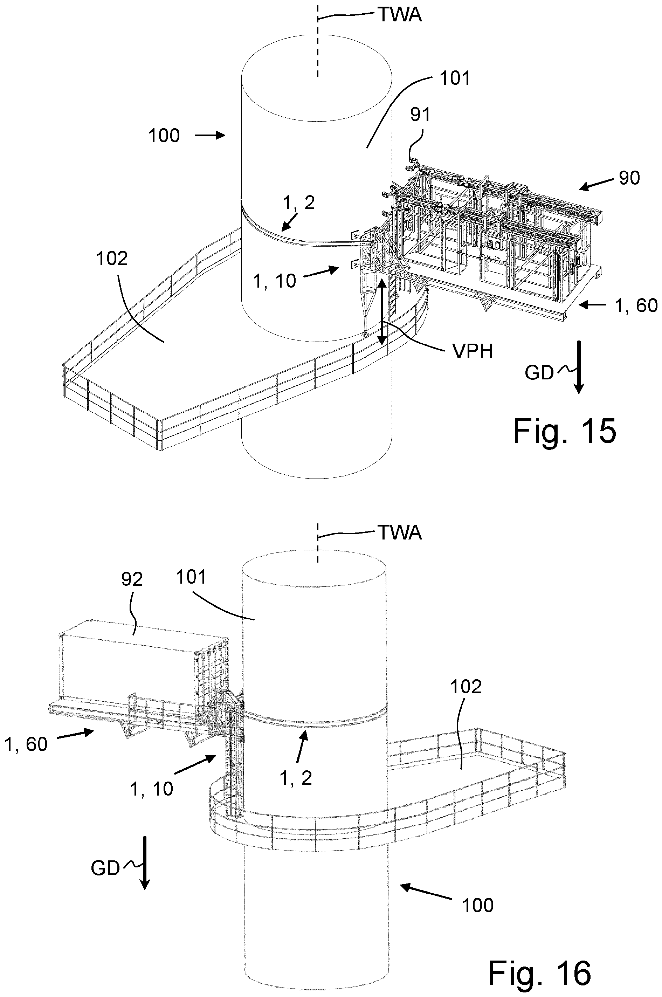

Fig. 15 shows a situation in which the blade access platform 90 is parked on the support structure 60. Thanks to the tower adapter 10 with the support structure 60, the blade access platform 90 is parked at the right angular position about the longitudinal axis TWA of the tower 100 for operation. The blade access platform 90 can be moved directly upward for accessing the blade to be inspected and maintained. There is no need to move the blade access platform 90 along a circumferential direction of the tower 100 as if the blade access platform 90 were parked on the enlarged portion of the balcony section 102. Said enlarged portion can be seen on the lower left portion in Fig. 15. Furthermore, rollers 92 of the blade access platform 90 for rolling against the outer surface 101 of the tower 100 are at or very close to the outer surface 101 (e.g. less than 1,5 away). Hence, the blade access platform 90 can be guided by the rollers 91 engaging the outer surface almost directly after the blade access platform 90 is lifted off from the support structure 60 and almost until the blade access platform 90 reaches its parking position on the support structure 60. This makes parking the blade access platform 90 and leaving the parking position of the blade access platform 90 easier and safer.

Fig. 16 shows a situation in which the freight container 92 is stored on the support structure 60.

The tower adapter 10 and the support structure 60 might be referred together as parking interface (e.g. for parking the blade access platform 90 and/or the container 92).

Naturally, any other loads could be parked or stored on the support structure 60. Further, the support structure 60 may be of any other shape and/or type as long as its mounting section 62 is suitable for mounting onto the tower adapter 10.

Apart from that, in general, the support structure 60 could be mounted with any other suitable means to the tower adapter 10. It is also possible that the support structure 60 is formed integrally with the main body 11 of the tower adapter 10.

In the following, the installation of the tower adapter 10 is described referring to Figs. 17 to 26.

Any one of, several of, or all of the aspects described regarding the delivery, installation, pre-(tensioning), using, and demounting of the tower adapter 10 and the support structure 60 may be considered as optional parts of the method for securing the tower adapter 10.

Turning to Fig. 17, the tower adapter 10 is dismantlable and is transferred to the tower 100 in parts. The parts are placed onto the enlarged portion of the balcony section 102 of the tower 100. For example, a Davit crane 107 installed at the enlarged portion may lift the parts of the tower adapter 10 from a ship onto the enlarged portion. It is noted that the enlarged portion is in front of an entrance 105 to the tower 100. Stairs 106 with a railing lead to the entrance 105. Compared to the situation shown in Fig. 15, parking a blade access platform on the enlarged portion and lifting it off from the enlarged portion would be more difficult and dangerous due to these obstacles. Further, as noted above, the enlarged portion is not at the correct angular position about the longitudinal axis TWA of the tower 100 (not shown in Fig. 17 but compare with Fig. 15) for accessing the blade for inspection and maintenance. In addition, the enlarged portion is too small to assemble and/or park the complete blade access platform 90 on it. Finally, the balcony section 102 has a handrail 103, also at the enlarged portion. The handrail 103 had to be at least partly removed, namely at an outer end of the enlarged portion, to park the larger blade access platform 90 on the enlarged portion.

Turning now to Fig. 18, the core portion of the tower adapter 10 has been assembled and is located at the correct angular position for blade inspection and maintenance. The core portion is now connected to the nacelle crane 108, e.g. via a cable 109. Here, the hook-receiving means 35A, 35B are exemplarily used for vertical suspension of the core portion with the nacelle crane 108.

Starting from Fig. 18, the core portion is lifted up with the nacelle crane 108 and the vertical support legs 27 are installed. If the vertical support legs 27 are itself dismantlable as in the illustrated embodiment (see section 28-2 in Fig. 17), this can be done in several stages. For example, the core portion is lifted up a bit and then the sections 28-1 are installed, and then the core portion with the installed sections 28-1 is lifted up further and the rest of the support legs 27 is installed.

In Fig. 19, the tower adapter 10 is completely assembly. It rests with the support legs 27 on the balcony section 102. In addition, the tower adapter 10 is still connected to the nacelle crane 108 and hence cannot tilt away from the outer surface 101 and fall into the sea.

An initial strap 71 is placed to engird the outer surface 101 with two loose ends facing the tower adapter 10. The loose ends are connected to auxiliary ropes 70A, 70B. The auxiliary ropes 70A, 70B may have been installed before, e.g. in the situation shown in Fig. 18. The initial strap 71 can be made of ultra-high-molecular-weight polyethylene fibers.

It should be noted that it is also possible to completely assemble the tower adapter 10 on the enlarged portion (or even to lift the completely assembled tower adapter 10 to the enlarged portion with the Davit crane 107) and to move it to the correct angular position as shown in Fig. 19 using the nacelle crane 108. The auxiliary ropes 70A, 70B may be already installed and used as tag lines, i.e. for stabilizing the lift and/or for maneuvering the tower adapter 10.

Starting from the Fig. 19, the initial strap 71 is tightened and maybe secured directly to the tower adapter 10, e.g. to the main body 11.

The result is shown in Fig. 20. The ends of the initial strap 71 are secured to the tower adapter 10 and the initial strap is sufficiently short and/or tightened. The initial strap 71 prevents the tower adapter 10 from tilting away from the outer surface 101 and hence from falling into the sea. The tower adapter 10 can be de-rigged (decoupled) from the nacelle crane 108 from now on.

Naturally, further strap as redundancy for the initial strap 71 could be used in addition in the same manner as the initial strap 71 (not shown).

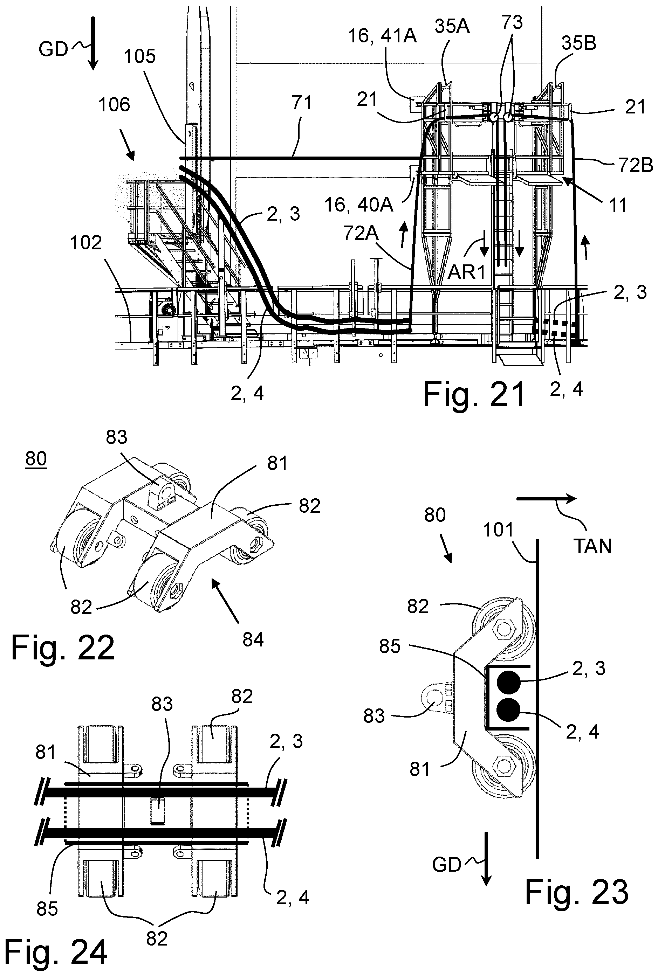

Next, the tension load transfer means 2, namely the two tension load pathway elements 3, 4 are placed to engird the outer surface 101 with two loose ends facing the tower adapter 10. The loose ends are connected to auxiliary ropes 72A, 72B for lifting the loose ends up to the main body 11 and securing it to the securing device 19. The auxiliary ropes 72A, 72B may be guided to the guiding elements 21. This allows to pull the free ends of the tension load pathway elements 3, 4 through the guiding elements by pulling the auxiliary ropes 72A, 72B (see arrows at auxiliary ropes 71A, 72B in Fig. 21). The tension load pathway elements 3, 4 might be heavier than the auxiliary ropes 72A, 72B. Pulleys 73 might be (temporarily) mounted to the main body 11 and facilitate pulling the auxiliary ropes 72A, 72B. In Fig. 21, the tension load pathway elements 3, 4 are pulled by pulling the auxiliary ropes 72A, 72B from the balcony section 102. No worker WK must stand on the tower adapter 10 for this pulling.

Especially if the tension load pathway elements 3, 4 are very heavy and/or not smooth, e.g. if they are metal chains, it might be not easy to lift them up at a side of the tower 100 facing away from the tower adapter 10 by simply pulling the loose, adapter-side ends. Figs. 22 to 25C show a trolly and how it can be used to assist lifting up the tension load pathway elements 3, 4.

The trolly 80 has chassis 81 and rollers 82 for rolling on the outer surface 101 of the tower 100. The rollers 82 are installed on the chassis 81. The running surface of the rollers 82 may be made of an elastomeric material, e.g. rubber, to reduce the risk of damaging the outer surface 101.

The rollers 82 may be low-friction wheels. This facilitates moving the trolly 80.

Additionally or alternatively, some (or all) of the rollers 82, e.g. the upper rollers 82 in Fig. 25B might be magnetic. This can help to stabilize the trolly 80 and to keep it up against the outer surface 101.

The trolly 80 has a receptacle 84 for receiving segments of the tension load pathway elements 3, 4. In particular, the receptacle 84 can be configured to receive a sleeve 85 through which the tension load pathway elements 3, 4 are guided. The receptacle 84 may be arranged on a side of the trolly 80 for facing the outer surface 101. Further, the trolly 80 can have engagement means 83, e.g. fixed to or formed integrally with the chassis 81. The engagement means 83 may allow to roll the trolly 80 (with the sleeve 85 and the segments of the tension load pathway elements 3, 4 therein) at the outer surface 101 upwards.

Fig. 25A to 25C show how the worker WK rolls the trolly 80 (with the sleeve 85 and the segments of the tension load pathway elements 3, 4 therein) at the outer surface 101 upwards, namely at a side opposite to the tower adapter 10. The worker WK uses a telescope 86 engaging with the engagement means 83. In this way, lifting up the tension load pathway elements 3, 4 is supported at the side of the outer surface 101 facing away from the tower adapter 10 while the loose ends at the side of the tower adapter 10 are pulled.

However, in the most cases, it is sufficient to pull on the loose ends of the tension load pathway elements 3, 4 to lift them completely and the trolly 80 is not needed.

Next, the tension load transfer means 2 are secured to the tensioning mechanism 20. In other words, the ends of the tension load pathway elements 3, 4 at the tower adapter 10 are secured to the subunits 203A to 204B. From now on, the initial strap 70 can be taken off.

It is noted that an upper end of a door of the entrance 105 may determine a minimum height for final positions of the tension load pathway elements 3, 4.

A further step is shown in Fig. 26. The standing platforms 23 are folded out for use. The worker WK has climbed up the ladder 32 and stands on one of the standing platform 23 and secured to the corresponding safety bar 22 above this standing platform 23, e.g. via at least one securing strip 87.

The tension load pathway elements 3, 4, 3A, 3B, 4A, 4B are pre-tensioned by means of the tensioning mechanism 20. For example, the worker WK may turn the screw elements 20-1 with an electric torque wrench.

The pre-tensioning "pulls" the tower adapter 10 towards the outer surface 101. When the abutment means 40 are already in contact with the outer surface 101, further tensioning results in pressing the tower adapter 10 (in a direction opposite to the normal direction TAN) stronger against the outer surface 101. This increases the frictional engagement of the abutment means 16 with the outer surface 101.

In particular, the tensioning mechanism 20 can be used to ensure (and adjust) a minimum frictional engagement of the abutment means 16 with the outer surface 101, even while the tower adapter 10 is vertically supported on the balcony section 102 via the vertical support legs 27.

By the (pre-)tensioning of the tension load pathway elements 3, 4, 3A, 3B, 4A, 4B by means of the tensioning means 20, it is avoided that the position and/or the alignment (e.g. a spatial alignment of the tower adapter 10 with respect to the gravity direction GD and/or the longitudinal axis TWA of the tower 100) of the tower adapter 10 changes when the vertical support legs 27 are removed. Further, it can be avoided that the position and/or the alignment of the tower adapter 10 is substantially changed when additional weight load is applied to the tower adapter 10, e.g. by mounting the support structure 60 to the tower adapter 10 and/or parking the blade access platform 90 or the freight container 92 on the support structure 60.

Naturally, with respect to the modification shown in Fig. 9, the installation differs in that the tower-side ends of the tension load pathway elements 3, 4 are fixed to the fixation means 104. Accordingly, those tower-side ends are then already in the correct position. With regard to the loose, adapter-side ends, the same procedures as described above can be performed.

Optionally, the desired tensile force(s) for pre-tensioning the individual tension load pathway elements 3, 4, 3A, 3B, 4A, 4B can be at least 1 kN, maybe at least 10 kN, maybe at least 50 kN. Additionally or alternatively, they can be 1000 kN at the maximum, maybe 250 kN at the maximum. For example, they can be 100 kN or 140 kN. It is not necessary but possible that the tensile forces for the different tension load pathway elements 3, 4, 3A, 3B, 4A, 4B are at least substantially the same. In general, the desired tensile force(s) may depend on an elasticity of the (material of the) the tensile load pathway elements 3, 4. For example, if the material thereof is very rigid, a very small or even no pre-tensioning at all may be needed.

Optionally, the tension means 20 include an indication mechanism that indicates when the desired tensile forces for pre-tensioning are reached. For example, the subunits 203A to 204B may provide a visual, audible, and/or tactile signal when the predetermined pre-tensioning is reached, respectively. For example, they may show a green mark then. This can be implemented with a spring mechanism, for example.

After the pre-tensioning, the worker WK can leave the tower adapter 10. The standing platforms 23 can be folded in. Optionally, the vertical support legs 27 or at least parts thereof can be removed. Another approach is adapting a mechanical connection of the vertical support leg 27 with the main body 11 to obtain at least one additional degree of freedom. This can prevent that loads are transferred from the main body 11 to the balcony section 102 in an undesired manner and/or to allow for tolerances for small changes in the position and/or alignment of the tower adapter 10, e.g. in the case of load changes. For example, main securing pins locking an otherwise flexible joint between the main body 11 and the individual vertical support leg 27 might be removed.

For mounting the blade access platform 92 on the tower adapter 10, the blade access platform 92 can be delivered parked on the suitable support structure 60, e.g. via a ship. The support structure 60 might be lifted together with the blade access platform 92 from the ship and mounted to the tower adapter 10. One or more cameras may be used to ensure correct engagement of the upper interface means, e.g. of the hooks 64A, 64B with the hook-receiving means 35A, 35B. The support structure then "leans" on the tower adapter 10 with the lower interface means.

## Claims

1. A tower adapter (10) securable on an outer surface (101) of a tower (100), for example the tower (100) of an offshore wind turbine, against falling, using tension load transfer means (2) with at least one tension load pathway element (3, 4; 3A, 3B, 4A, 4B) being bowable,
wherein the tower adapter (10) includes:
abutment means (16) for abutment on the outer surface (101) of the tower (100); and
a securing device (19) for engagement with the tension load transfer means (2) for securing the tower adapter (10) against normal displacement away from the outer surface (101) of the tower (100);
**characterized in that** the tower adapter (10) is configured such that the abutment means (16) secure the tower adapter (10) against falling by frictional engagement with the outer surface (101) of the tower (100) when the tower adapter (10) is secured against normal displacement away from the outer surface (101) of the tower (100) by the engagement of the securing device (19) with the tension load transfer means (2).

2. The tower adapter (10) according to claim 1, wherein the securing device (19) includes a tensioning mechanism (20) for tensioning the at least one tension load pathway element (3, 4; 3A, 3B, 4A, 4B) for pressing the tower adapter (10) onto the outer surface of the tower (100).

3. The tower adapter (10) according to any one of the preceding claims, wherein the abutment means (16) include at least one friction abutment pad (40A, 40B) located at the tower adapter (10).

4. The tower adapter (10) according to claim 3, wherein the at least one abutment pad (40A, 40B, 41A, 41B) is a primary friction abutment pad (40A, 40B) located at a first abutment level (FAL) along a vertical direction (TAV) of the tower adapter (10).

5. The tower adapter (10) according to claim 4, wherein the securing device (19) is configured for engagement with the at least one tension load pathway element (3, 4; 3A, 3B, 4A, 4B) at a tension engagement level (TEL) along the vertical direction (TAV) of the tower adapter (10), wherein the tension engagement level (TEL) is located at or above the first abutment level (FAL) in the vertical direction (TAV) of the tower adapter (10).

6. The tower adapter (10) according to claim 4 or 5, wherein the abutment means (16) include at least one secondary friction abutment pad (41A, 41B) located at a second abutment level (SAL) along the vertical direction (TAV) of the tower adapter (10), wherein the second abutment level (SAL) is located above the first abutment level (FAL) in the vertical direction (TAV) of the tower adapter (10).

7. The tower adapter (10) according to claims 5 and 6, wherein the tension engagement level (TEL) is located above the first abutment level (FAL) and at or below the second abutment level (SAL) in the vertical direction (TAV) of the tower adapter (10).

8. The tower adapter (10) according to any one of the claims 3 to 7, wherein each friction abutment pad (40A, 40B, 41A, 41B) includes a contact surface (43) comprising an elastomeric material.

9. The tower adapter (10) according to any one of the preceding claims, wherein the tower adapter (10) includes a main body (11) and at least two detachable vertical support legs (27).

10. The tower adapter (10) according to any one of the preceding claims, wherein the tower adapter (10) includes at least one standing platform (23) for a worker (WK).

11. The tower adapter (10) according to claim 10, wherein the at least one standing platform (23) is detachable and/or can be folded in.

12. The tower adapter (10) according to any one of the preceding claims, wherein the tower adapter (10) includes at least one ladder (25, 32).

13. A tower adapter system (1), wherein the tower adapter system (1) comprises:
a tower adapter (10) according to any one of the preceding claims; and at least one of the following:
the tension load transfer means (2); and
a support structure (60) for supporting bulky loads, wherein the support structure (60) is fixed or mountable to the tower adapter (10).

14. The tower adapter system (1) according to claim 13, wherein the tower adapter system (1) includes the tension load transfer means (2), wherein the at least one tension load pathway element (3, 4; 3A, 3B, 4A, 4B) includes a rope, a belt, a strap, a cable, and/or a chain.

15. Method for securing a tower adapter (10), for example according to any one of the claims 1 to 12, on an outer surface (101) of a tower (100), for example the tower (100) of an offshore wind turbine, against falling using a tension load transfer means (2) including at least one tension load pathway element (3, 4; 3A, 3B, 4A, 4B),
wherein the method includes:
positioning the tower adapter (10) at the outer surface (101) of the tower (100);
securing the tower adapter (10) against normal displacement away from the outer surface (101) of the tower (100) using a securing device (19) engaging with the tension load transfer means (2); and
preventing the tower adapter (10) against falling by frictional engagement of abutment means (16) of the tower adapter (10) abutting on the outer surface (101) of the tower (100).
